(19) Europäisches Patentamt European Patent Office Office européen des brevets

(11) **EP 4 748 676 A1**

(12) **DEMANDE DE BREVET EUROPEEN**

(43) Date de publication:
**27.05.2026 Bulletin 2026/22**

(21) Numéro de dépôt: **25217387.7**

(22) Date de dépôt: **20.11.2025**

(51) Classification Internationale des Brevets (IPC):
**B60W 40/08** (2012.01)      **B60W 40/09** (2012.01)
**B60W 50/00** (2006.01)      **B60W 50/14** (2020.01)

(52) Classification Coopérative des Brevets (CPC):
**B60W 40/08; B60W 40/09; B60W 50/00; B60W 50/14;** B60W 2040/0872; B60W 2050/0075; B60W 2050/0088; B60W 2540/22; B60W 2540/221; B60W 2555/20; B60W 2556/10

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **22.11.2024 FR 2412862**

(71) Demandeur: **AMPERE s.a.s.**
**92100 Boulougne-Billancourt (FR)**

(72) Inventeurs:
- **BASILIO, Numa**
  **78084 Guyancourt (FR)**
- **LE-HIR, Nathalie**
  **78084 Guyancourt (FR)**

(74) Mandataire: **Renault Group**
**1, avenue du Golf**
**FR TCR AVA 4 4C**
**78084 Guyancourt Cedex (FR)**

(54) **MÉTHODE D'IDENTIFICATION ET D ÉVALUATION DE LA DISPONIBILITÉ D'UN CONDUCTEUR DE VÉHICULE**

(57) Cette méthode d'identification et d'évaluation de la disponibilité d'un conducteur de véhicule pour l'adaptation de sollicitations comprend les étapes suivantes :
- Acquisition (étape E1) de données relatives au conducteur et/ou au véhicule et/ou environnementales susceptibles d'influer sur la disponibilité du conducteur à recevoir des sollicitations de la part du véhicule ;
- Définition (étape E2), à partir des données acquises, d'un ensemble de facteurs internes au véhicule et de facteurs externes au véhicule et attribution à chaque facteur d'une valeur dépendant de l'impact dudit facteur sur la disponibilité du conducteur ;
- Calcul (étape E3) d'un indice de disponibilité du conducteur en fonction de l'ensemble de facteurs internes et de l'ensemble de facteurs externes ; et
- Détermination (étape E4) du type de sollicitation à envoyer au conducteur selon l'indice de disponibilité calculé.

[Fig. 1]

EP 4 748 676 A1

## Description

### Domaine technique

La présente invention concerne l'évaluation de la disponibilité et de la possibilité pour un conducteur de véhicule de recevoir différents types de signaux provenant d'interfaces homme-machine en fonction de l'état du conducteur et des contraintes contextuelles.

En particulier, la présente invention concerne l'évaluation de la disponibilité d'un conducteur automobile en fonction de divers paramètres tels que la charge mentale dudit conducteur, la vitesse du véhicule, la météo, la densité du trafic, etc.

De manière générale, l'invention s'applique à tout conducteur de véhicule ou poste de travail nécessitant de rester concentré sous peine de faire courir un risque à une personne extérieure ou à lui-même.

### Techniques antérieures

La connectivité grandissante des véhicules permet d'acquérir de nombreuses données sur le contexte de conduite dans lequel évolue le conducteur dudit véhicule.

En particulier, les capteurs de mesure et de détection ne cessent d'évoluer et la capacité de calcul et de transmission d'informations au sein des véhicules ne cesse d'augmenter. Dans ce contexte, les systèmes électroniques à bord des véhicules, par exemple les véhicules automobiles, permettent de proposer de nombreuses prestations au conducteur : des alertes de danger, des informations de niveau de charge, de disponibilité de borne, de trafic, d'itinéraire, de météo, de lecture des panneaux et des lignes, tout cela via des sollicitations sous forme de texte, de pictogrammes, de sons, de pop-ups, de changements d'ambiance lumineuse ou via un avatar numérique.

Le niveau de sollicitation du conducteur peut alors, dans certains cas, être trop important par rapport à la concentration que nécessite la conduite à ce moment-là.

Par exemple, actuellement certaines technologies permettent de mesurer l'état de stress d'un conducteur et de lui proposer un exercice de respiration relaxant si nécessaire. Si le conducteur roule de jour sur une autoroute dégagée, cette proposition s'avère pertinente ; en revanche, s'il roule de nuit sur une route de campagne sous une pluie battante, la notification de cette proposition n'est pas du tout appropriée car elle ajoute une source de distraction alors qu'une concentration totale est nécessaire.

### Exposé de l'invention

La présente invention a donc pour but de pallier les inconvénients précités et de fournir une méthode permettant de déterminer le niveau de disponibilité d'un conducteur en temps réel et de définir les prestations, les signaux envoyés par des interfaces homme-machine, ou encore les services qui peuvent lui être proposés en fonction de cette disponibilité.

La présente invention a pour objet une méthode d'identification et d'évaluation de la disponibilité d'un conducteur de véhicule pour l'adaptation de sollicitations à l'attention dudit conducteur, la méthode comprenant les étapes suivantes :

- Acquisition de données physiologiques et/ou comportementales relatives au conducteur et/ou de données relatives au véhicule et/ou environnementales susceptibles d'influer sur la disponibilité du conducteur à recevoir des sollicitations de la part du véhicule ;
- Définition, à partir des données acquises, d'un ensemble de facteurs internes au véhicule et de facteurs externes au véhicule et attribution à chaque facteur d'une valeur dépendant de l'impact dudit facteur sur la disponibilité du conducteur ;
- Calcul d'un indice de disponibilité du conducteur en fonction de l'ensemble de facteurs internes et de l'ensemble de facteurs externes, un premier coefficient étant appliqué à l'ensemble de facteurs internes, un deuxième coefficient étant appliqué à l'ensemble de facteurs externes, le premier et le deuxième coefficient dépendant de l'expérience et/ou de l'historique d'accidents du conducteur ; et
- Détermination du type de sollicitation à envoyer au conducteur selon l'indice de disponibilité calculé.

Ainsi, la présente méthode accorde de l'importance au cumul des sollicitations et la prise en compte simultanée de plusieurs facteurs, notamment internes et externes au véhicule, permet de ne pas traiter chaque sollicitation unitairement et de fournir une méthode efficace pour évaluer la disponibilité d'un conducteur pour la conduite.

Avantageusement, la somme du premier et du deuxième coefficient est égale à 1.

Avantageusement, l'étape de calcul de l'indice de disponibilité est mise en œuvre de sorte que l'indice de disponibilité est égal à

$$ID = ID_0 \times \left( a \prod_{i=1}^{n} FI_i + (1-a) \prod_{i=1}^{m} FE_i \right)$$

avec $ID_0$ un indice de disponibilité initial prédéterminé,

$\alpha$ et $(1-\alpha)$ les premier et deuxième coefficients compris entre 0 et 1,

$n$ le nombre de facteurs internes, $m$ le nombre de facteurs externes,

$FI_i$ et $FE_i$ les valeurs du ième facteur interne et respectivement facteur externe, compris entre 0 et 1.

Avantageusement, l'étape d'acquisition de données est effectuée par l'intermédiaire de capteurs et/ou de calculateurs comprenant un capteur physiologique, et/ou une caméra dirigée vers le conducteur, et/ou une caméra dirigée vers la route, et/ou un calculateur du véhicule, et/ou un module météo, et/ou une interface homme-machine adaptée pour la saisie de données par le conducteur.

Dans un mode de mise en œuvre, la valeur de chaque facteur interne ou externe est fonction d'un troisième coefficient δ dépendant de la facilité de déconcentration du conducteur, et/ou du style de conduite, et/ou des conditions de conduite.

Avantageusement, le troisième coefficient est compris entre 0,05 et 0,45 et chaque facteur interne ou externe a une valeur égale à 1 si ledit facteur n'a pas d'impact sur la disponibilité du conducteur, ou égale à 1-δ si ledit facteur a un impact modéré sur la disponibilité du conducteur, ou égale à 1-2δ si ledit facteur a un impact élevé sur la disponibilité du conducteur.

Dans un mode particulier de mise en œuvre, le premier et/ou le troisième coefficient est déterminé par apprentissage automatique, de préférence par réseau de neurones artificiels.

Avantageusement, les facteurs internes comprennent un facteur interne d'état émotionnel du conducteur, et/ou un facteur interne d'état attentionnel du conducteur, et/ou un facteur interne d'état de vigilance du conducteur, et/ou un facteur interne de mode de conduite.

Avantageusement, les facteurs externes comprennent un facteur externe de trafic, et/ou un facteur externe d'événement contextuel, et/ou un facteur externe de type de route, et/ou un facteur externe de contexte environnemental.

Dans un mode particulier de mise en œuvre, le type de sollicitation déterminé lors de l'étape de détermination du type de sollicitation à envoyer au conducteur selon l'indice de disponibilité calculé prend en compte la fréquence d'envoi des sollicitations, et/ou la modalité sensorielle de la sollicitation, et/ou la densité d'informations transmises par une sollicitation, et/ou la zone d'émission de la sollicitation, et/ou la réduction ou l'augmentation de ladite sollicitation par l'assistance à la conduite, et/ou le type d'informations transmises par la sollicitation, et/ou la mise en place d'une contremesure psychologique visant à augmenter la disponibilité du conducteur.

Avantageusement, l'étape d'acquisition de données comprend l'acquisition de la vitesse du véhicule, la méthode comprenant directement une étape d'attribution à l'indice de disponibilité d'une valeur prédéterminée lorsque ladite vitesse du véhicule est nulle.

## Brève description des dessins

D'autres buts, caractéristiques et avantages de l'invention apparaîtront à la lecture de la description suivante, donnée uniquement à titre d'exemple non limitatif, et faite en référence au dessin annexé sur lequel :
[Fig.1]
est une représentation schématique des différentes étapes de la méthode selon l'invention.

## Exposé détaillé d'au moins un mode de réalisation

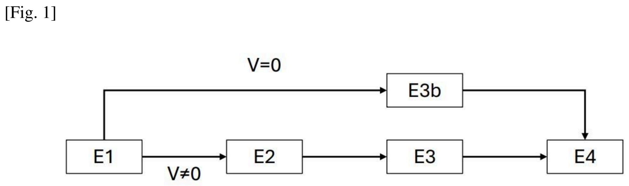

On a représenté schématiquement sur la [Fig.1] les différentes étapes d'une méthode d'identification et d'évaluation de la disponibilité d'un conducteur de véhicule pour l'adaptation de sollicitations en provenance du véhicule, à l'attention dudit conducteur.

La méthode est par exemple mise en œuvre dans un véhicule automobile par un calculateur dudit véhicule automobile.

Pour la mise en œuvre de cette méthode, on effectue en premier lieu une étape E1 d'acquisition de données physiologiques et/ou comportementales relatives au conducteur et/ou de données relatives au véhicule et/ou environnementales susceptibles d'influer sur la disponibilité du conducteur à recevoir des sollicitations de la part du véhicule. L'acquisition de données est de préférence réalisée pour plusieurs de ces ensembles de données, encore plus préférentiellement pour la totalité de ces ensembles de données.

Cette étape E1 est mise en œuvre par l'intermédiaire de capteurs et/ou de calculateurs comprenant par exemple un capteur physiologique, et/ou une caméra dirigée vers le conducteur, et/ou une caméra dirigée vers la route, et/ou un calculateur du véhicule, et/ou un module météo, et/ou une interface homme-machine adapté pour la saisie de données par le conducteur, ledit conducteur pouvant entrer des informations sur la situation de conduite ou sur ses propres sensations de fatigue ou de disponibilité.

Les données physiologiques sont par exemple des battements de cœur du conducteur captés par un bracelet connecté.

Les données comportementales sont par exemple des mouvements du conducteur captés par une caméra, tels que des gestes lents ou rapides démontrant une fatigue ou une nervosité, ou encore le mouvement des paupières qui se ferment. Un micro peut également être utilisé pour détecter une conversation.

Les données du véhicule sont par exemple la vitesse du véhicule, la température intérieure et/ou extérieure, le mode de conduite, des données concernant le trajet.

Les données environnementales sont par exemple des données météo, des données du trafic alentour ou de la présence de travaux ou de dangers.

Puis, on effectue une étape E2 de définition, à partir des données acquises, d'un ensemble de facteurs internes au véhicule, notés FI, et de facteurs externes au véhicule, notés FE, cette étape E2 comprenant également une étape d'attribution à chaque facteur FI ou FE d'une valeur dépendant de l'impact dudit facteur FI ou FE sur la disponibilité du conducteur.

Chaque valeur de chaque facteur FI ou FE est par exemple comprise entre 0 et 1, la valeur 0 étant exclue. Plus la valeur du facteur est proche de 1, moins le facteur a un impact important sur la disponibilité du conducteur. Inversement, plus la valeur du facteur est proche de 0 plus le facteur a un impact important sur la disponibilité du conducteur.

Les facteurs internes comprennent par exemple un facteur interne d'état émotionnel du conducteur, révélateur de colère ou à l'inverse de sérénité, et/ou un facteur interne d'état attentionnel du conducteur, révélateur par exemple d'une conversation téléphonique en cours, et/ou un facteur interne d'état de vigilance du conducteur, révélateur par exemple d'une fatigue ou d'un temps de trajet élevé, et/ou un facteur interne de mode de conduite, révélateur par exemple d'un mode sport. De préférence, les facteurs internes comprennent tous les facteurs internes précités. Encore plus préférentiellement, les facteurs internes comprennent uniquement tous les facteurs internes précités.

Les facteurs externes comprennent par exemple un facteur externe de trafic, révélateur par exemple de la densité du trafic routier, et/ou un facteur externe d'événement contextuel, révélateur par exemple de la présence d'un passage piéton, d'un rond-point ou d'un péage à proximité, et/ou un facteur externe de type de route, révélant par exemple la présence d'une autoroute ou d'une route de campagne, et/ou un facteur externe de contexte environnemental, révélateur par exemple d'une météo pluvieuse, ensoleillée, ou de la nuit. De préférence, les facteurs externes comprennent tous les facteurs externes précités. Encore plus préférentiellement, les facteurs externes comprennent uniquement tous les facteurs externes précités.

On effectue ensuite une étape E3 de calcul d'un indice de disponibilité du conducteur en fonction de l'ensemble de facteurs internes et de l'ensemble de facteurs externes, un premier coefficient étant appliqué à l'ensemble de facteurs internes, un deuxième coefficient étant appliqué à l'ensemble de facteurs externes, le premier et le deuxième coefficient dépendant de l'expérience et/ou de l'historique d'accidents du conducteur.

La somme du premier et du deuxième coefficient est égale à 1.

Ainsi, le premier coefficient, noté $\alpha$, est compris entre 0 et 1 et le deuxième coefficient est égal à (1-$\alpha$).

Ainsi, selon la valeur du premier coefficient $\alpha$, un poids plus important peut être mis sur les facteurs internes ou sur les facteurs externes.

Selon un mode particulier de mise en œuvre, l'étape E3 de calcul de l'indice de disponibilité, noté ID, est mise en œuvre de sorte que l'indice de disponibilité est égal à

$$ID = ID_0 \times \left( a\prod_{i=1}^{n}FI_i + (1-a)\prod_{i=1}^{m}FE_i \right)$$

avec $ID_0$ un indice de disponibilité initial prédéterminé, par exemple égal à 100, n le nombre de facteurs internes, et m le nombre de facteurs externes.

Le premier coefficient $\alpha$ est par exemple égal à 0,6. Cependant, le premier coefficient dépendant de l'expérience et/ou de l'historique d'accidents du conducteur, il peut être réduit ou augmenté, par exemple à 0,8 pour un conducteur expérimenté. Pour un tel coefficient, les facteurs externes deviennent alors moins significatifs. A l'inverse, un jeune conducteur peut se voir attribuer un coefficient de 0,5 en partant du postulat que tout facteur, autant interne qu'externe pourrait représenté un risque. De même, un conducteur ayant eu un accident récemment aurait une valeur de premier coefficient $\alpha$ plus faible pour privilégier les facteurs externes dans son indice de disponibilité.

Dans un mode particulier de mise en œuvre, le premier coefficient est déterminé au moyen d'une boucle basée sur de l'apprentissage par réseau de neurones, par exemple alimentée par des retours du conducteur sur sa disponibilité lors de certaines situations.

Avantageusement, la valeur de chaque facteur interne ou externe est fonction d'un troisième coefficient, noté $\delta$ dépendant de la facilité de déconcentration du conducteur, et/ou du style de conduite, et/ou des conditions de conduite.

Avantageusement, le troisième coefficient est compris entre 0,05 et 0,45 et chaque facteur interne ou externe a une valeur égale à 1 si ledit facteur n'a pas d'impact sur la disponibilité du conducteur, ou égale à 1-$\delta$ si ledit facteur a un impact modéré sur la disponibilité du conducteur, ou égale à 1-2$\delta$ si ledit facteur a un impact élevé sur la disponibilité du conducteur.

Ainsi, dans ce mode de mise en œuvre, chaque facteur interne ou externe ne peut atteindre que trois valeurs différentes selon l'impact sur la disponibilité du conducteur que peut avoir ledit facteur.

Le troisième coefficient $\delta$ est choisi proche de 0,05 si le conducteur est non facilement déconcentré. A l'inverse, le troisième coefficient $\delta$ est choisi proche de 0,45 si le conducteur est facilement déconcentré. Pour un conducteur standard, le troisième coefficient $\delta$ est par exemple de 0,2.

La valeur du troisième coefficient $\delta$ peut être choisie ou modifiée en considérant des différences inter-individuelles pré-établies, déclarées par le conducteur ou calculées, par exemple par apprentissage par réseaux de neurones ou clustering.

Par exemple, le conducteur peut déclarer qu'il n'est pas à l'aise à conduire de nuit. La valeur du troisième coefficient $\delta$ sera augmentée pour ce conducteur comparativement aux autres conducteurs n'ayant pas déclaré cela.

De même, en fonction du style de conduite détectée (à-coups, ralentissement, correction de trajectoire, accélération latérale/longitudinale inhabituelle) qui pourrait indiquer une hésitation, un inconfort du conducteur, la valeur du troisième coefficient δ sera augmentée pour ce conducteur comparativement aux autres conducteurs pour son trajet et ses trajets futurs.

La valeur du troisième coefficient δ peut également être modulée par l'anticipation d'un évènement à risque. Par exemple, lors d'un événement tel que de la visibilité réduite, un embouteillage ou un obstacle sur la chaussée, la valeur du troisième coefficient δ sera inversement proportionnelle à la distance de l'évènement. Si l'évènement est proche alors la valeur du troisième coefficient δ sera élevée.

Selon un mode particulier de mise en œuvre, l'étape E1 d'acquisition de données comprend l'acquisition de la vitesse V du véhicule, la méthode comprenant alors directement une étape E3b d'attribution à l'indice de disponibilité une valeur prédéterminée lorsque ladite vitesse V du véhicule est nulle. Ladite valeur prédéterminée est par exemple l'indice de disponibilité initial prédéterminé $ID_0$, par exemple égal à 100, indiquant donc une disponibilité totale du conducteur lors de l'arrêt du véhicule.

Enfin, on effectue une étape E4 de détermination du type de sollicitation à envoyer au conducteur selon l'indice de disponibilité calculé. Chaque type de sollicitation correspond à une valeur de l'indice de disponibilité.

En effet, lors de la conduite, le conducteur reçoit des sollicitations de la part du véhicule, ces sollicitations étant modulées lors de cette étape E4 selon la valeur de l'indice de disponibilité.

En particulier, on entend par type de sollicitation l'ensemble des paramètres des sollicitations pouvant influer sur la disponibilité du conducteur, avec en particulier la fréquence d'envoi des sollicitations, et/ou la modalité sensorielle de la sollicitation, qu'elle soit visuelle, sonore, ou haptique, et/ou la densité d'informations transmises par une sollicitation, et/ou la zone d'émission de la sollicitation, par exemple le tableau de bord ou l'affichage tête haute, et/ou la réduction ou l'augmentation de ladite sollicitation par assistance à la conduite, et/ou le type d'informations transmises par la sollicitation, et/ou la mise en place d'une contremesure psychologique visant à augmenter la disponibilité du conducteur.

L'assistance à la conduite est par exemple une assistance latérale et/ou longitudinale et/ou une régulation de la vitesse du véhicule, permettant de minimiser la somme de toutes les sollicitations.

Une contremesure psychologique est par exemple la mise en route d'une playlist de musique relaxante visant à diminuer l'intensité émotionnelle du conducteur et donc à augmenter son indice de disponibilité.

Dans un mode particulier de mise en œuvre, la valeur de l'indice de disponibilité est une valeur comprise entre 0 et 100.

La disponibilité du conducteur est classée selon quatre niveaux. Le premier niveau équivaut à un indice de disponibilité inférieur à 25.

Le deuxième niveau équivaut à un indice de disponibilité compris entre 25 et 50.

Le troisième niveau équivaut à un indice de disponibilité compris entre 50 et 75.

Le quatrième niveau équivaut à un indice de disponibilité supérieur à 75.

Pour un indice de disponibilité calculé inférieur à 25, le calculateur du véhicule détermine lors de l'étape E4 le niveau le plus bas d'interaction et de sollicitations avec le conducteur. De ce fait, les modalités sensorielles de sollicitation, la fréquence d'affichage des informations, les zones d'affichage, ou encore la densité informationnelle transmises au conducteur devront être réduites au strict nécessaire. Par ailleurs, le niveau d'assistance à la conduite sera renforcé pour sécuriser le conducteur. Les services proposés seront très fortement réduits. Enfin, une contremesure adaptée pourra être mise en œuvre pour ramener l'indice de disponibilité à un niveau approprié pour la conduite, par exemple supérieur à 75.

A titre d'exemple, pour un indice de disponibilité calculé inférieur à 25, les sollicitations au conducteur ne seront que haptiques ou sonores, la fréquence des sollicitations sera réduite au maximum, par exemple à une sollicitation toutes les cinq minutes, la zone d'affichage sera l'affichage tête haute ou le tableau de bord, la densité d'information affichée sera limitée à quelques mots, par exemple moins de 5 mots, l'assistance à la conduite sera élevée, la radio et la météo ne seront pas consultables et une suggestion d'arrêt sera proposée à titre de contremesure.

A l'inverse, à titre d'exemple, pour un indice de disponibilité calculé supérieur à 75, les sollicitations au conducteur pourront être visuelles et sonores, la fréquence des sollicitations pourra être élevée, par exemple une sollicitation toutes les dix secondes, la zone d'affichage sera l'affichage tête haute et le tableau de bord ainsi que tout autre écran et voyant, la densité d'information affichée pourra être élevée, l'assistance à la conduite pourra être désactivée, et la radio et la météo seront consultables.

Pour des niveaux de disponibilité intermédiaire, les sollicitations sont également aménagées.

Afin de garantir un indice de disponibilité à jour, la présente méthode est mise en œuvre régulièrement, par exemple à une fréquence entre toutes les cinq secondes et toutes les cinq minutes.

## Revendications

1. Méthode d'identification et d'évaluation de la disponibilité d'un conducteur de véhicule pour l'adaptation de sollicitations à l'attention dudit conducteur, **caractérisée en ce qu'**elle comprend les étapes suivantes :

- Acquisition (étape E1) de données physiologiques et/ou comportementales relatives au conducteur et/ou de données relatives au véhicule et/ou environnementales susceptibles d'influer sur la disponibilité du conducteur à recevoir des sollicitations de la part du véhicule ;

- Définition (étape E2), à partir des données acquises, d'un ensemble de facteurs internes au véhicule et de facteurs externes au véhicule et attribution à chaque facteur d'une valeur dépendant de l'impact dudit facteur sur la disponibilité du conducteur ;

- Calcul (étape E3) d'un indice de disponibilité du conducteur en fonction de l'ensemble de facteurs internes et de l'ensemble de facteurs externes, un premier coefficient étant appliqué à l'ensemble de facteurs internes, un deuxième coefficient étant appliqué à l'ensemble de facteurs externes, le premier et le deuxième coefficient dépendant de l'expérience et/ou de l'historique d'accidents du conducteur ; et

- Détermination (étape E4) du type de sollicitation à envoyer au conducteur selon l'indice de disponibilité calculé.

2. Méthode selon la revendication 1, dans laquelle la somme du premier et du deuxième coefficient est égale à 1.

3. Méthode selon l'une des revendications 1 et 2, dans laquelle l'étape (E3) de calcul de l'indice de disponibilité est mise en œuvre de sorte que l'indice de disponibilité est égal à

$$ID = ID_0 \times \left( a \prod_{i=1}^{n} FI_i + (1-a) \prod_{i=1}^{m} FE_i \right),$$

avec $ID_0$ un indice de disponibilité initial prédéterminé,
$\alpha$ et $(1-\alpha)$ les premier et deuxième coefficients compris entre 0 et 1,
n le nombre de facteurs internes, m le nombre de facteurs externes,
$FI_i$ et $FE_i$ les valeurs du ième facteur interne et respectivement facteur externe, compris entre 0 et 1.

4. Méthode selon l'une quelconque des revendications 1 à 3, dans laquelle l'étape (E1) d'acquisition de données est effectuée par l'intermédiaire de capteurs et/ou de calculateurs comprenant un capteur physiologique, et/ou une caméra dirigée vers le conducteur, et/ou une caméra dirigée vers la route, et/ou un calculateur du véhicule, et/ou un module météo, et/ou une interface homme-machine adapté pour la saisie de données par le conducteur.

5. Méthode selon l'une quelconque des revendications 1 à 4, dans laquelle la valeur de chaque facteur interne ou externe est fonction d'un troisième coefficient ($\delta$) dépendant de la facilité de déconcentration du conducteur, et/ou du style de conduite, et/ou des conditions de conduite.

6. Méthode selon la revendication 5, dans laquelle le troisième coefficient est compris entre 0,05 et 0,45 et chaque facteur interne ou externe a une valeur égale à 1 si ledit facteur n'a pas d'impact sur la disponibilité du conducteur, ou égale à $1-\delta$ si ledit facteur a un impact modéré sur la disponibilité du conducteur, ou égale à $1-2\delta$ si ledit facteur a un impact élevé sur la disponibilité du conducteur.

7. Méthode selon l'une des revendications 5 et 6, dans laquelle le premier et/ou le troisième coefficient est déterminé par apprentissage automatique, de préférence par réseau de neurones artificiels.

8. Méthode selon l'une quelconque des revendications 1 à 7, dans laquelle les facteurs internes comprennent un facteur interne d'état émotionnel du conducteur, et/ou un facteur interne d'état attentionnel du conducteur, et/ou un facteur interne d'état de vigilance du conducteur, et/ou un facteur interne de mode de conduite, et/ou dans laquelle les facteurs externes comprennent un facteur externe de trafic, et/ou un facteur externe d'événement contextuel, et/ou un facteur externe de type de route, et/ou un facteur externe de contexte environnemental.

9. Méthode selon l'une quelconque des revendications 1 à 8, dans laquelle le type de sollicitation déterminé lors de l'étape (E4) de détermination du type de sollicitation à envoyer au conducteur selon l'indice de disponibilité calculé prend en compte la fréquence d'envoi des sollicitations, et/ou la modalité sensorielle de la sollicitation, et/ou la densité d'informations transmises par une sollicitation, et/ou la zone d'émission de la sollicitation, et/ou la réduction ou l'augmentation de ladite sollicitation par l'assistance à la conduite, et/ou le type d'informations transmises par la sollicitation, et/ou la mise en place d'une contremesure psychologique visant à augmenter la disponibilité du conducteur

10. Méthode selon l'une quelconque des revendications 1 à 9, dans laquelle l'étape (E1) d'acquisition de données comprend l'acquisition de la vitesse du véhicule, la méthode comprenant directement une étape (E3b) d'attribution à l'indice de disponibilité d'une valeur prédéterminée lorsque ladite vitesse du véhicule est nulle.

[Fig. 1]

**RAPPORT DE RECHERCHE EUROPEENNE**

Numéro de la demande

EP 25 21 7387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 10 611 384 B1 (VANDENBERG III DIRK JOHN [US] ET AL) 7 avril 2020 (2020-04-07) * le document en entier * * revendications 1, 13, 14 * * figures 4, 5 * ----- | 1-10 | INV. B60W40/08 B60W40/09 B60W50/00 B60W50/14 |
| Y | US 2022/266691 A1 (LAITSAARI JUHA [FI] ET AL) 25 août 2022 (2022-08-25) * revendications 1, 2, 3, 7, 8 * * figure 3 * * alinéas [0003] - [0045], [0069] - [0110] * ----- | 1-10 | |
| Y | US 10 913 464 B1 (QIAO NINGSHENG [US] ET AL) 9 février 2021 (2021-02-09) * le document en entier * ----- | 1-10 | |
| Y | WO 2020/006154 A2 (KATZ ITAY [US]; ANAVI TAMIR [IL]; STEINBERG EREZ [IL]) 2 janvier 2020 (2020-01-02) * alinéas [0062] - [0066], [0071] - [0075], [0118] - [0121], [0138], [0221] - [0224] * * revendications 1, 2, 4, 5, 10, 12, 19 * ----- | 1-10 | **DOMAINES TECHNIQUES RECHERCHES (IPC)** B60W |

Le présent rapport a été établi pour toutes les revendications

| Lieu de la recherche | Date d'achèvement de la recherche | Examinateur |
|---|---|---|
| Munich | 19 décembre 2025 | Laiou, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 7387

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2025

| Document brevet cité au rapport de recherche | Date de publication | Membre(s) de la famille de brevet(s) | Date de publication |
|---|---|---|---|
| US 10611384    B1 | 07-04-2020 | AUCUN | |
| US 2022266691  A1 | 25-08-2022 | EP       4046888 A1<br>FI        129297 B<br>US    2022266691 A1 | 24-08-2022<br>15-11-2021<br>25-08-2022 |
| US 10913464    B1 | 09-02-2021 | CN      112644511 A<br>DE 102020124755 A1<br>US      10913464 B1 | 13-04-2021<br>15-04-2021<br>09-02-2021 |
| WO 2020006154  A2 | 02-01-2020 | CN      113056390 A<br>EP       3837137 A2<br>JP    2021530069 A<br>US    2020207358 A1<br>US    2020216078 A1<br>US    2021269045 A1<br>WO    2020006154 A2 | 29-06-2021<br>23-06-2021<br>04-11-2021<br>02-07-2020<br>09-07-2020<br>02-09-2021<br>02-01-2020 |

EPO FORM P0460

Pour tout renseignement concernant cette annexe : voir Journal Officiel de l'Office européen des brevets, No.12/82